Europäisches Patentamt

(19) European Patent Office

Office européen des brevets

(11) Publication number: **0 169 929**
**A1**

## (12) EUROPEAN PATENT APPLICATION

(21) Application number: **84109191.1**

(22) Date of filing: **02.08.84**

(51) Int. Cl.⁴: **G 11 B 5/66**
**G 11 B 5/64**

(43) Date of publication of application:
**05.02.86 Bulletin 86/6**

(84) Designated Contracting States:
**DE FR GB NL**

(71) Applicant: **KONISHIROKU PHOTO INDUSTRY CO. LTD.**
**No. 26-2, Nishishinjuku 1-chome Shinjuku-ku**
**Tokyo 160(JP)**

(72) Inventor: **Ishibasi, Shozo**
**432-7-1, Terada-cho**
**Hachioji-shi Tokyo, 192(JP)**

(72) Inventor: **Kasanuki, Yuji**
**2-5-19, Owada-cho**
**Hachioji-shi Tokyo, 192(JP)**

(72) Inventor: **Naoe, Masahiko**
**1-36-10, Kitasenzoku**
**Ota-ku Tokyo(JP)**

(74) Representative: **Henkel, Feiler, Hänzel & Partner**
**Möhlstrasse 37**
**D-8000 München 80(DE)**

(54) **Magnetic recording medium.**

(57) A magnetic recording medium having a plurality of laminated magnetic recording layers on a substrate wherein at least one of these magnetic recording layers satisfy the following two requisites:

(a) Iron oxide based continuous magnetic layer; and

(b) Ratio of the perpendicular residual magnetization $M_V$ to the in-plane residual magnetization $M_H$ or $M_V/M_H$ not smaller than 0.5.

And a magnetic recording medium having a magnetic recording layer or layers on each of two or more surfaces of a substrate and magnetic recording layer on at least one of these surfaces satisfies the following requisites:

(a) Iron oxide based continuous magnetic film; and

(b) Ratio of the perpendicular residual magnetization $M_V$ to the in-plane residual magnetization $M_H$ or $M_V/M_H$ not smaller than 0.5.

EP 0 169 929 A1

S P E C I F I C A T I O N

## BACKGROUND OF THE INVENTION

Title of the Invention

Magnetic recording medium

Field of the Invention

The present invention relates to magnetic recording media, such as the magnetic tape and magnetic disk.

Description of the Prior Art

The magnetic tape, magnetic disk, etc. have so far been widely used in recording various electric signals, such as the video signal, audio signal, digital signal, etc. These media have been developed in a system that makes use of in-plane longitudinal magnetizations in its magnetic layer (magnetic recording layer) that is formed on a substrate by deposition. With the magnetic recording density is increased in recent years, however, the magnetic recording system making use of in-plane longitudinal magnetizations has such a difficulty that as the wave length of recorded signal gets shorter, there appears a higher demagnetizing field within the medium to decrease and turn residual magnetizations resulting in a pronounced reduction in the pick-up output on playback. It is

- 1 -

thus very difficult to record a signal of wavelength at the submicron level or shorter.

Meanwhiles, a perpendicular magnetic recording system making use of magnetizations in the direction of thickness of the magnetic layer of magnetic recording medium (or so-called perpendicular magnetizations) has recently been proposed (for example, "Nikkei Electronics", No. 192, Aug. 7, 1978). According to this magnetic recording system, the demagnetizing field that affects residual magnetizations in the medium declines as the wavelength of recorded signal is shorter. So the above system is thought to have preferable characteristics for recording the high density signal, being a system essentially suitable to high density magnetic recording.

On the one hand, a known example of the magnetic recording medium having a plurality of laminated magnetic layers, when these layers are of coating type, is the audio magnetic tape.

For example, according to the Japanese Patent Opening No. 125006/1979, the surface of substrate is first coated with a paint comprising a magnetic powder dispersed in a binder to form the first layer as a coating type longitudinally recording magnetic layer (the magnetizable axis of this layer is directed in-plane), on which a continuous thin film is formed of magnetic grains without use of any binder to provide a continuous thin film type longitudinal recording magnetic layer. In this medium, however, the first magnetic layer which is of coating type has a poor thermal conductivity, so as a material to form an upper magnetic layer is deposited, the latent heat and also the radiation heat from the depositing means are liable to build up to affect and damage such coating type magnetic layer. As a result, the magnetic recording medium thus obtained has never a satisfactory accuracy of surface roughness, being given a dropout at many points and exhibiting only an inferior S/N ratio.

Another magnetic recording medium is disclosed in Japanese Patent Opening No. 145105/1979 wherein a continuous thin film type magnetic layer of in-plane magnetic anisotrophy is formed of Co, $\gamma$-Fe$_2$O$_3$, Fe$_3$O$_4$, Co-Ni, or the like as the first layer and a continuous film type magnetic layer of perpendicular magnetic anisotrophy is formed of Co-Gd, Fe-Gd, or the like as the second layer. In this medium, however, magnetic layers themselves are inferior in durability and undergo unfavorable time-dependent changes, so a high density recording/playback cannot be attained at a satisfactorily high S/N ratio.

To perform the perpendicular recording as mentioned above in high efficiency, the recording layer of magnetic recording medium must have its magnetizable axis in the perpendicular direction (namely, in the direction of the thickness of magnetic layer). For this type of magnetic

- 3 -

recording medium, a coating type medium is known wherein a substrate is coated with a magnetic paint primarily comprising magnetic powder and binder and the magnetizable axis of the magnetic layer thus formed is oriented perpendicular to the plane of such layer. For this coating type medium, Co, $Fe_3O_4$, $\gamma$-$Fe_2O_3$, Co-added $Fe_3O_4$, Co-added $\gamma$-$Fe_2O_3$, hexagonal ferrite (for example, barium ferrite), Mn-Bi, or the like can be used as the magnetic powder (Japanese Patent Opening Nos. 46803/1977, 67406/1978, 78403/1977, 86103/1980, 78403/1977, and 87202/1979). Containing a binder that is non-magnetic in the magnetic layer, however, the above coating type medium can attain only a limited filling density of magnetic powder in such layer, so a satisfactorily high S/N ratio can never be achieved. Further, the recordable signal volume is limited by the grain size of magnetic grains. Because of these and other reasons, media having a magnetic coating for its magnetic layer are not adequate for perpendicular magnetic recording.

A continuous thin film type magnetic recording medium wherein a perpendicularly magnetizable layer is formed, for example, by depositing a magnetic material in a form of continuous film on the substrate without use of any binder is being noticed as a medium suitable to high density recording.

Such continuous thin film type recording medium for perpendicular magnetic recording has, for example, as disclosed in Japanese Patent Examined Publication No.

17282/1982, a magnetic recording layer composed of a film of cobalt-chromium alloy. Particularly, a Co-Cr alloy film containing 5 to 25 weight percent of cobalt is allegedly preferable. Another magnetic recording medium that has a magnetic layer composed of a Co-Cr alloy film with up to 30 weight percent of rhodium added thereto is disclosed in Japanese Patent Opening No 111110/1980. There are also known magnetic recording media that make use of a cobalt-vanadium alloy film (for example, IEEE "Transaction on Magnetism", Vol. 18, No. 6, pp. 1116, 1982) and a cobalt-ruthenium alloy film (for example, Collection of Papers from the 18th Symposium "Perpendicular Magnetic Recording" Held at Research Institute of Electrical Communication, Tohoku University in March, 1982).

After an investigation, however, the present authors discovered that the magnetic recording media as constructed above are not satisfactory for any practical application since the Co-Cr based perpendicularly magnetizable film has the following defects:

(1) In order to orient the magnetizable axis perpendicular to the plane of magnetic layer, it is necessary to form the magnetic layer particularly in a high vacuum of $10^{-7}$ Torr or less. Beside, conditions, such as a sophisticated washing treatment of the substrate and low sputtering rate, are needed. There are thus very complicated control factors of perpendicular orientation.

(2) Since the signal is recorded and played back by sliding the perpendicular recording/playback head relative to the magnetic recording medium, there occurs a poor interfacial state between the head and medium, so the medium is liable to scratch and also the head to be damaged.

(3) The magnetic layer is hard. If it is formed on a flexible substrate, therefore, it is liable to crack.

(4) The resistance to corrosion is never satisfactorily high for use as a magnetic recording medium, so a protective film must be provided in the surface.

(5) It is difficult to find a stable supply source of the raw material cobalt, which means a higher material cost.

The investigation of the present authors also showed that with the magnetic layer or layers provided only on one surface, the conventional magnetic recording media have a limited effective area for magnetic recording with the volume and types of recordable signal limited. For example, generally, the magnetic tape is provided with a magnetic layer only on one of its main surfaces.

## OBJECTS AND SUMMARY OF THE INVENTION

Accordingly, it is an object of the present invention to provide a low cost magnetic recording medium having a plurality of laminated magnetic layers which allows recording and playback at a high recording density, with its frequency characteristics further improved and its pick-up output on playback increased by making use of the merits of laminated structure, and yet is less liable to deterioration with time.

It is another object of the invention to provide a magnetic recording medium that is suitable to perpendicular magnetic recording at a high density and superior in the mechanical strength, chemical stability, etc., having favorable magnetic characteristics and further being capable of multiplying the volume and types of recordable signal substantially.

A magnetic recording medium to which the present invention relates has a plurality of laminated magnetic recording layers one or more of which satisfy both of the following requisites:

(a) Continuous magnetic layer based on iron oxide; and

(b) Ratio of the residual magnetization perpendicular to the plane of magnetic layer, namely, perpendicular residulal magnetization $M_V$ to the in-plane residual magnetization $M_H$, or $M_V/M_H$ not lower than 0.5.

According to the invention, there are a plurality of laminated magnetic recording layers, one or more of which are based on iron oxide, so superior characteristics peculiar to this kind of oxide compound (namely, the high mechanical strength, chemical stability, low cost, etc.) are made available and therefore the surface protective film is unnecessary. As a result, a narrower gap can be used between the magnetic head and medium, which allows recording at a higher density, while it becomes possible to reduce the cost also from viewpoint of the material.

Further, since the magnetic recording layer based on iron oxide has a ratio of the perpendicular residual magnetization to the in-plane residual magnetization ($M_V/M_H$) not lower than 0.5, magnetic moments in the magnetic material of iron oxide rise by an angle of 30° or more from the plane of layer, so a structure that can achieve perpendicular magnetizations satisfactorily at high density giving a high pick-up output on playback can be materialized. The above magnetizations $M_V$ and $M_H$ can be measured, for example, on a testpiece oscillation type magnetometer from Toei Kogyo Co., Ltd. With a $M_V/M_H$ lower than 0.5, it is difficult to have magnetic moments that are suitable for perpendicular magnetizations.

Furthermore, the magnetic recording medium of the invention is provided with one or more magnetic recording layers laminated with the above iron oxide based magnetic recording layer. With a proper selection and combination of these laminated magnetic recording layers, favorable recording/playback characteristics can be attained in both of the low and high frequency regions for improved frequency characteristics and/or the retention of residual magnetizations, their perpendicular orientation, etc. can be improved due to the magnetic flux closure effect.

It is still another object of the present invention to provide a magnetic recording medium wherein a magnetic layer or layers are formed on each of a plurality of surfaces of the substrate and a magnetic layer on at least one of the surfaces satisfies both of the following requisites:

(a)  Continuous magnetic layer based on iron oxide; and

(b)  Ratio of the perpendicular residual magnetization $M_V$ to the in-plane residual magnetization or $M_V/M_H$ not lower than 0.5.

According to the invention, since at least a magnetic layer on one of the surfaces of the substrate is based on iron oxide, favorable mechanical strength, high chemical stability, etc. are exhibited as in the preceding case allowing high density recording and low cost fabrication.  Further, the above ratio of residual magnetizations is ideal for perpendicular magnetic recording.

On the one hand, a noteworthy point of the above magnetic recording medium is that the above iron oxide based magnetic layer is formed on two or more surfaces of the substrate. This design enlarges the effective area for magnetic recording, so the recordable signal volume can be increased while it becomes possible to record one signal in the magnetic layer on one surface and another signal in the magnetic layer on a different surface to pick up these signals independently or for synthesis. Diversified data processing can thus be made.

Other objects and aspects of the invention will become apparent from the following description of embodiments with reference to the accompanying drawings.

## BRIEF DESCRIPTION OF THE DRAWINGS

Fig. 1 (A) to (F) are cross sections of various magnetic recording media embodying the invention.

Figs. 2 and 3 are curves representing the playback characteristics of some of these media.

Fig. 4 is curves representing the perpendicular anisotrophy of various types of magnetic recording layers.

Fig. 5 is a schematic cross section of an opposing targets sputtering system.

Fig. 6 is hysteresis curves of a magnetic recording medium.

Fig. 7 is a comparison of magnetic recording media in the time course of their residual magnetic flux density.

Fig. 8 (a), (b), Fig. 9 (a) to (d), Fig. 10 (a), (b), and Fig. 11 (a), (b) are perspective views and cross sections of another various magnetic recording media.

Fig. 12 is a schematic cross section of an opposing targets sputtering system.

Figs. 13 and 14 are plan views of two different set-ups of targets and substrate drums.

Figs. 15 and 16 are cross sections of a drum in two different set-ups for formation of a magnetic layer on its inner surface.

Fig. 17 is a plan view of a set-up to form a magnetic layer on a tape-like substrate.

Fig. 18 is a fragmentary perspective view of Fig. 17.

Fig. 19 is a playback characteristic curve of a magnetic recording medium.

Fig. 20 is an enlarged fragmentary perspective view in section of the conventional photomemory medium.

Fig. 21 is an enlarged fragmentary perspective view in section of the conventional photomagnetic memory medium.

Fig. 22 is the same enlarged fragmentary perspective view in section of the conventional photomagnetic memory medium as in Fig. 21 but with tracking guides formed thereon.

Fig. 23 (a) to (d) are an enlarged fragmentary cross section of various magnetic recording media embodying the present invention with tracking guides formed.

Fig. 24 A to C are enlarged cross sections of a magnetic recording medium at successive steps of a tracking guide formation process.

Fig. 25 is a schematic diagram of a photomagnetic memory system.

Fig. 26 (a) to (d) are enlarged fragmentary cross sections of a magnetic recording medium with tracking guides formed in different patterns.

Fig. (a) to (c) are various patterns of tracking guides viewed from above.

And Fig. 28 is curves comparing the percentage light reflections from given Examples and Control of magnetic recording medium.

DESCRIPTION OF THE PREFERRED EMBODIMENTS

The iron oxide based magnetic recording layer as mentioned above used in the magnetic recording medium embodying the present invention is essentially different from the conventional coating type magnetic layer in that with no binder used, it is a continuous thin film of iron oxide, for example, $Fe_3O_4$, $\gamma-Fe_2O_3$, or a Berthollide compound of nonstoichiometric composition intermediate between the above two compounds, characterized by a large saturation magnetization with a coercive force Hc of 100 to 5,000 Oe. Preferably 50 weight percent or more and more preferably 70 weight percent or more of such magnetic layer is accounted for by iron plus oxygen wherein the ratio of oxygen to iron is preferably 1 to 3 and more preferably 4/3 to 2 in molecular population. Iron oxides as mentioned above are thus preferable. If the above iron oxide has a spinel type crystalline structure, it has a higher saturation magnetization, giving a higher residual magnetic flux density on playback of the recorded signal and a very favorable reproduction sensitivity. Particularly, in case of $Fe_3O_4$ and $\gamma-Fe_2O_3$, the orientation of the (111) and (100) planes, respectively, perpendicular to the plane of magnetic layer is preferable. Generally, materials that belong to the category of magnetic iron oxide include $\alpha-Fe_2O_3$ having a rhombohedral crystalline structure and exhibiting parasitic ferromagnetism, $Fe_3O_4$ having a spinel structure and exhibiting ferrimagnetism, $\gamma-Fe_2O_3$ or Berthollide compound formed between the above, barium, strontium or lead ferrite that is an oxide of hexagonal crystalline structure, its derivatives and rare earth garnet type ferrite of garnet structure. If these iron oxides are compared in the saturation magnetization that is an important parameter representing their magnetic characteristics, $\alpha-Fe_2O_3$ is 3.0 gauss, barium ferrite, strontium ferrite and lead ferrite about 380 gauss at most, and further the garnet type ferrite 140 gauss at most. By contrast, the spinel type ferrite preferably used by the present invention exhibits a saturation magnetization of 480 gauss which is the largest among iron oxides. On playback of the recorded signal, such large saturation magnetization is very effective in assuring a satisfactorily high residual magnetic flux density for a favorable reproduction sensitivity. On the other hand, saturation magnetic flux densities almost as high as the spinel type ferrite are exhibited by the barium ferrite and strontium ferrite. However, to form a continuous thin film type magnetic layer, they are not adequate since there are difficulties in the film fabrication condition with them. For example, in the sputtering system, the substrate must be maintained at a high temperature of 500°C, which imposes restrictions on the usable substrate material, etc. (for example, a plastic substrate that is poorly resistant to heat cannot be used). By contrast, with the spinel type iron oxide preferably used by the invention, the film fabrication can be achieved at a lower temperature, namely, room temperature to 300°C, so practically no restriction is imposed on the substrate material. It is noted however that metals and non-metals other than iron and oxygen, semimetals, oxides, alloys, and/or compounds may be added to the magnetic layer to improve its magnetic characteristics, such as the coercive force, saturation magnetization and residual magnetization, its crystallinity, and orientation of crystallites in the direction of a particular axis. Examples of these additives are Al, Co, Co-Mn, Zn, Co-Zn, Li, Cr, Ti, Li-Cr, Mg, Mg-Ni, Mn-Zn, Ni, Ni-Al, Ni-Zn, Cu, Cu-Mn, Cu-Zn, V, etc. though other elements, alloys, and compounds may also be used.

Other magnetic recording layer that is provided beside the above iron oxide based perpendicularly magnetizable magnetic recording layer may have its magnetizable axis in the direction in-plane or perpendicular to the plane of layer as mentioned below.

(1)  Magnetic recording layer with the in-plane magnetizable axis

(a)  Coating type magnetic layer

For this type of magnetic layer, first, there are those that make use of a magnetic powder of Co, $Fe_3O_4$, $\gamma\text{-}Fe_2O_3$, Co-deposited $\gamma\text{-}Fe_2O_3$, $CrO_2$, or the like and exhibit a coercive force Hc of 200 to 3,000 Oe for its magnetic characteristics.  Electricity-to-magnetism conversion characteristics characterized by excellent frequency characteristics from low to high frequency region can thus be materialized.  With Hc lower than 200 oe, the recorded signal is poorly retained while Hc higher than 3,000 Oe makes it difficult to record the signal through the interaction between electricity and magnetism.

For the magnetic powder of other coating type magnetic recording layer, there are available Co-Fe, Fe, Fe-Si, Permalloy, Sendust, Mumetal, Mn-Zn ferrite, Ni-Zn ferrite, Cu-Zn ferrite, etc.  In this case, a magnetic powder of soft magnetism with a low Hc (200 Oe or less, and preferably 10

- 15 -

Oe or less) and high permeability can be used. With a material of soft magnetism, the magnetic flux can be more concentrated on recording and demagnetization after recording can be thereby decreased to improve the retention of recorded signal. Namely, endowed with a property to allow passage of the magnetic flux therethrough more readily, the magnetic recording layer of high permeability effectively concentrates the magnetic flux from magnetic poles and retains the residual magnetization fully due to the formation of magnetic flux closure circuit. An improvement in the sensitivity on recording/playback and a higher pick-up output on playback can thus be achieved without affecting the high recording density.

The magnetic paint used to form such coating type magnetic recording layer can be loaded with a dispersant, lubricant, abrasives, antistatic agent, and other additives, as necessary. On the other hand, for the binder, any hitherto known thermoplastic resin, thermosetting resin, reaction type resin, resin hardenable under irradiation with an electron beam, and their mixture are applicable. For the above thermoplastic resin, a product characterized by a softening point of 150°C or under, mean molecular weight of 10,000 to 200,000 and degree of polymerization of about 200 to 3,000 is used. Examples are vinyl chloride-vinyl acetate copolymer, vinyl chloride-vinylidene chloride copolymer, vinyl chloride-acrylonitrile copolymer, acrylate
ester-acrylonitrile copolymer, urethane elastomer,
vinylidene chloride-acrylonitrile copolymer, cellulose
derivatives (cellulose acetate butyrate, cellulose
diacetate, cellolose triacetate, cellulose propionate,
nitrocellulose, etc.), polyester resin, and their mixture.

The above thermosetting resin or reaction type resin
has a molecular weight of 200,000 or under at the state
dissolved in the paint solution, which undergoes, after
coating and drying, a reaction, such as condensation or
addition, to increase its molecular weight to infinity.
Among resin products, those that neither soften nor melt
before they undergo hardening are preferable for use.
Examples are epoxy resin, hardenable type polyurethane
resin, silicone resin, reactive type acrylic resin, mixture
of high molecular weight polyester resin and isocyanate
prepolymer, mixture of methacrylate copolymer and
diisocyante prepolymer, mixture of polyester polyol and
polyisocyanate, mixture of low molecular weight glycol, high
molecular weight diol and triphenylmethanetriisocyanate, and
mixture of the above. Examples of the resin hardenable
under irradiation with an electron beam are unsaturated
prepolymers, for example, of maleic anhydride type,
urethaneacrylic type, epoxyacrylic type, polyesteracrylic
type, polyetheracrylic type, polyurethaneacrylic type, polyamidacrylic type, etc. Or for the multifunctional monomer, etheracrylic type, urethaneacrylic type, epoxyacrylic type, phosphate-acrylic type, etc. can be cited.

The above binders can be used independently or in combination with addition of an additive or additives as necessary. As for the mixing ratio of the ferromagnetic powder and binder, 100 parts by weight of the former is mixed with 10 to 400 parts by weight and preferably 30 to 200 parts by weight of the latter. If the binder is added in excess, the resultant magnetic recording medium suffers from a lowered recording density while too little addition of the binder results in unpreferable situations, such as the inferior mechanical strength and lowered durability of the magnetic layer.

Beside, to further improve the durability of the magnetic recording medium embodying the present invention, the magnetic layer can be loaded with various hardeners, for example, polyisocyanate. Examples of such polyisocyanate are an addition product of 3 moles of tolylenediisocyanate and 1 mole of trimethylolpropane, addition product of 3 moles of meta-xylylenediisocyanate and 1 mole of trimethylolpropane.

Beside the ferromagnetic powder, binder, and hardener as mentioned above, the magnetic layer can further be loaded with a dispersant, lubricant, abrasives, antistatic agent, etc. as additives. Examples of the applicable dispersant are fatty acids of 8 to 18 carbon atoms (expressed by a formula of RCOOH where R is a saturated or unsaturated aliphatic group of 7 to 17 carbon atoms), such as capric acid, palmitic acid, stearic acid, oleic acid, their salts with alkali metals (Li, Na, K, etc.) or alkaline earth metals (Mg, Ca, Ba, etc.), as well as lecithin. Beside, higher alcohols containing 12 or more carbon atoms and their sulfate ester are applicable. Common surfactant products that are available commercially are also applicable. These dispersants can be used independently or in combination. They are added in a quantity of 1 to 20 parts by weight to 100 parts by weight of the binder. Examples of the applicable lubricant are silicone oil, carbon black, graphite, carbon black graft polymer, molybdenum disulfide, tungsten disulfide, etc. These lubricants are added in a quantity of 0.2 to 20 parts by weight to 100 parts by weight of the binder. Examples of the applicable abbrasives are alumina, silicon carbide, chromium oxide, corundum, etc. These abbrasives are used in a mean grain size of 0.05 to 5 μ and more preferably 0.1 to 2 μ. They are added in a quantity of 2 to 20 parts by weight to 100 parts by weight of the binder. Examples of the applicable antistatic agent are powder of conductive materials, such as graphite, carbon black, tin oxide-antimony oxide based compound, tin oxide-titanium oxide-antimony oxide based compound and carbon black graft polymer; natural surfactants such as saponine; non-ionic surfactants such as alkyleneoxide surfactant; cationic surfactants, such as higher alkylamines, quaternary ammonium salts, phosphonium or sulfonium salts; anionic surfactants containing an acidic group or groups, such as carbonic acid group, sulfonic acid group, phosphoric acid group, sulfate ester group, and phosphate ester group, in their molecules; amphoteric surfactants, such as aminosulfonic acids, sulfate or phosphate ester of amino-alcohols.

For the solvent of the magnetic paint or the solvent that is added when the magnetic paint is applied, common organic solvents may be used. Examples are ketones, such as acetone, methyl ethyl ketone, methyl isobutyl ketone, and cyclohexanone; alcohols, such as methanol and buthanol; esters, such as ethyl acetate and ethyl lactate; ethers, such as diethyleneglycol dimethyl ether, tetrahydrofurane and dioxane; aromatic hydrocarbons such as toluene and xylene; halogenated hydrocarbons, such as methylene chloride, ethylene chloride, chloroform and dichlorobenznene.

(b) Continuous thin film type magnetic layer

This type of magnetic layer is constructed of magnetic grains bound to one another continuously without intervention of any binder. Examples of the applicable magnetic powder are $Fe_3O_4$, $\gamma$-$Fe_2O_3$, Berthollide compounds whose composition is between the above two compounds, Co-Ni alloy, with or without addition of various metals. The range of acceptable Hc and the expected effects are as described above for the coating type. Available methods of the layer fabrication are vacuum evaporation, ion plating, sputtering, ordinary plating, etc. It is noted that the magnetic powder of soft magnetism as mentioned above can also be used.

(2) Magnetic recording layer with the perpendicular magnetizable axis

(a) Coating type magnetic layer

Magnetic grains composed of a magnetoplunbite type compound such as barium ferrite, or $Fe_3O_4$, $\gamma$-$Fe_2O_3$, Co-deposited $\gamma$-$Fe_2O_3$, MnBi, Co, or the like are oriented perpendicular.

(b) Continuous thin film type magnetic layer

This type of magnetic layer may be a thin film formed by depositing iron oxide based magnetic powder, Co-Cr with or without addition of Rh or Mo, Co-V, Co-Ru, or the like using the sputtering or vacuum evaporation method. Or it may be a Co-Ni-Mn-P or Co plated film.

On the one hand, various materials are applicable as the substrate of the magnetic recording medium embodying the present invention. .For example, for the material of the substrate that has desirable surface flatness and smoothness, there are applicable plastic materials, such as polyethyleneterephthalate, polyvinyl chloride, cellulose triacetate, polycarbonates, polyimides and polyamides, polymethylmethacrylate; and ceramic materials such as glass. Metal substrates may also be used. The substrate can be shaped in a form of sheet, card, disk, drum, and also long tape.

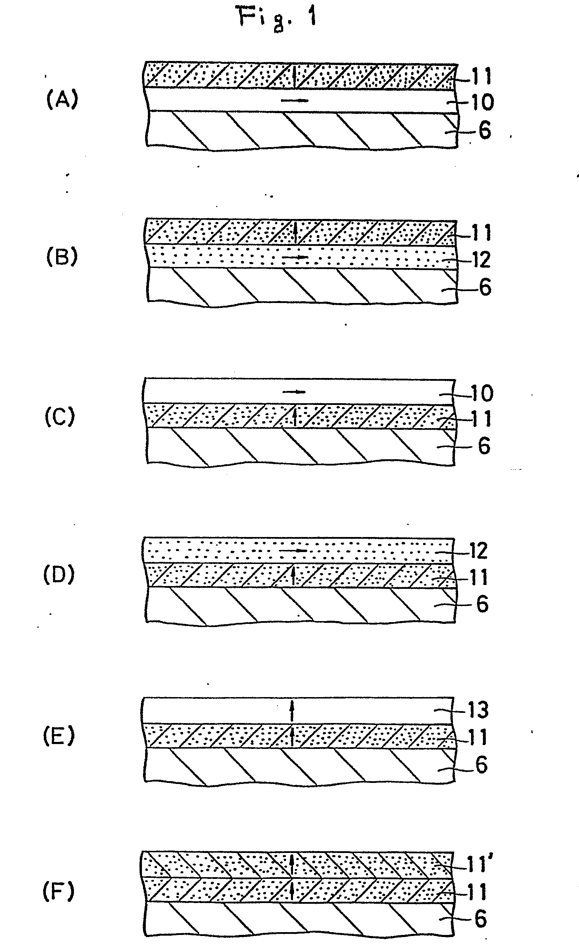

Various magnetic recording media embodying the present invention are shown in Fig. 1, in which each of arrows indicate the direction of magnetizable axis. It is noted that for the substrate 6 polyethyleneterephthalate, etc. are used.

In the example of Fig. 1 (A), on a substrate 6, first, there is formed a coating type magnetic recording layer 10 of in-plane magnetic anisotrophy composed of a binder loaded with a ferromagnetic powder ($\gamma$-Fe$_2$O$_3$: needle shape ratio = 6 to 8, Hc = 350 Oe). After it is fully calendered, an iron oxide based continuous thin film type magnetic recording layer 11 of perpendicular magnetic anisotrophy with Hc$\perp$ (coercive force in the direction perpendicular to the plane of layer; the same definition will apply hereinafter) = 400 Oe and M$_V$/M$_H$ = 1.5 is formed by the opposing targets sputtering method as mentioned later.

In Fig. 1 (B), for the first layer, Co-Ni (Co: 80%, Ni: 20%) is deposited at a rate of 800 A/sec by the oblique evaporation method to form a 3,000 A thick continuous thin film type magnetic recording layer 12 of in-plane magnetic anisotrophy (Hc = 350 Oe), and further, for the second layer, an iron oxide based continuous thin film type perpendicularly magnetizable layer 11 similar to the above is formed.

In Fig. 1 (C), for the first layer, an iron oxide based perpendicularly magnetizable film 11 similar to the above is formed and for the second layer, a $\gamma-Fe_2O_3$ based coating type magnetic recording layer 10 similar to the above (except for Hc = 400 oe) is formed.

In Fig. 1 (D), an iron oxide based perpendicularly magnetizable film 11 similar to the above is overlaid with a Co-Ni based continuous thin film 12 of longitudinal recording system similar to the above.

In Fig. 1 (E), an iron oxide based perpendicularly magnetizable film 11 similar to the above is overlaid with a coating type perpendicularly magnetizable film 13 containing a ferromagnetic powder of hexagonal ferrite or barium ferrite (mean grain size: 0.1 to 0.2 μm). The above film 13 is formed by coating with a ferromagnetic powder dispersed in the same binder as used for the above coating type longitudinal recording layer 10 and then by perpendicular orientation in a magnetic field and drying.

In Fig. 1 (F), both the lower and upper layers 11, 11' are the above iron oxide based perpendicularly magnetizable layer. It is noted however that as compared to Hc = 400 Oe, $M_V/M_H$ = 1.5 of the lower layer 11, the upper layer has Hc = 420 Oe, $M_V/M_H$ = 1.8.

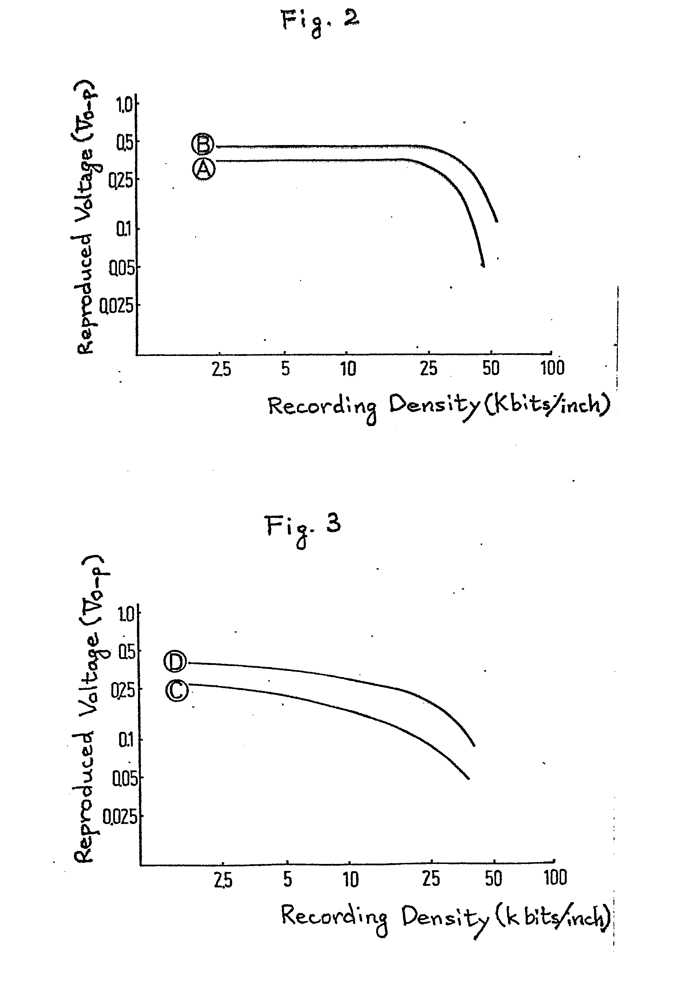

The magnetic recording media of the above constructions were, for example, fabricated in a form of magnetic tape. With tapes thus formed that conformed to Fig. 1 (A) to (D), respectively, recording/playback experiments were made using a ring type head with a gap of 0.5 μm and track width of 100 μm. Results are shown in Figs. 2 and 3. In these figures, Ⓐ to Ⓓ refer to tapes of Fig. 1 (A) to (D), respectively.

It is found from these results that particularly the tapes of Fig. 1 (A) and (B) performed superbly in the high frequency region, exhibiting favorable frequency characteristics in a wide frequency range from low to high recording density. Further, it is noted that tapes of Fig. 1 (B) and (D) gave a higher pick-up output on playback as compared to the ones of Fig. 1 (A) and (C), respectively. This suggested that as the magnetic film that was laminated with the iron oxide based perpendicularly magnetizable film, the continuous thin film type could give a higher pick-up output than the coating type.

Another remark is that being composed of a combination of two magnetic films, one with the in-plane magnetizable axis

- 24 -

and the other with the perpendicular magnetizable axis, the tapes of Fig. 1 (A) to (D) had improved frequency characteristics, wherein those of Fig. 1 (A) and (B) had an in-plane magnetizable film as the lower layer and could thus expect effects of magnetic flux closure circuit, capable of attaining a higher recording density, sensitivity and pick-up output. Further, in the examples of Fig. 1 (E) and (F), it is noted that since the lower layer had perpendicular orientation, the magnetizable axis of magnetic grains deposited thereon had a higher probability of the perpendicular alignment to follow such orientation, resulting in an improvement in the degree of perpendicular orientation in the upper layer.

Next, magnetic recording media having a magnetic film with the in-plane magnetizable axis for the lower layer and a magnetic film with the perpendicular magnetizable axis for the upper layer were prepared. Samples 1 and 2 were fabricated for each medium. In the former, the lower layer was of coating type while in the latter, it was of continuous thin film type (in both Samples, the upper layer was formed to have Hc = 1,000 Oe). In cases in which a magnetic film composed of Co-Cr, amorphous Tb-Fe or the compound of the present invention, namely, iron oxide was formed for the upper layer, measurements of the perpendicular magnetic anisotrophy $M_V/M_H$ were made with the above Samples, which gave results as shown

- 25 -

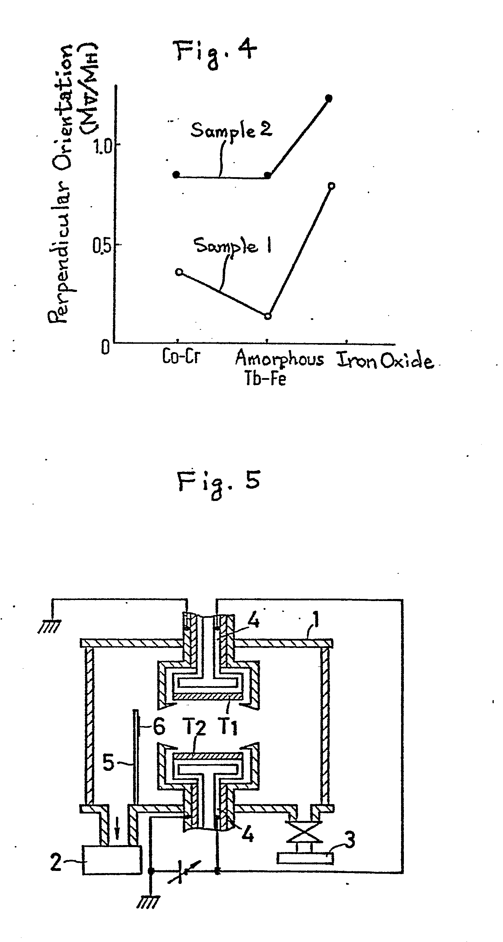

in Fig. 4. These results show that in case an iron oxide based perpendicularly magnetizable film is formed for the upper layer in conformity to the invention, the perpendicular orientation there improves substantial as compared to the cases that use other materials and further that if a continuous magnetic thin film is provided for the lower layer, there is an improvement in the perpendicular orientation as compared to the case of the coating type lower layer.

It is noted that in the present invention the above continuous thin film type perpendicularly magnetizable layer can be formed by the opposing targets sputtering method (particularly iron oxide based compound, barium ferrite; substrate temperature: 300°C ), RF sputtering method (for example, Co-Cr alloy, Co-Cr-Rh alloy, Co-Ru alloy targets; deposited film thickness: 0.5 $\mu$m; vacuum: $10^{-7}$ Torr; Ar gas pressure: $10^{-4}$ to $10^{-1}$ Torr), vacuum evaporation method (for example, Co-Cr alloy, Co-Ni-P alloy as evaporation source; vacuum: $10^{-5}$ Torr; rate of deposition: 4,000 Å/sec), or non-electrolytic plating method.

On the other hand, the above coating type in-plane magnetizable layer can be formed, for example, in a coating thickness of 6 $\mu$m by using a magnetic paint of the following composition:

Ferromagnetic powder ($\gamma$-Fe$_3$O$_3$ with needle shape ratio of 6 to 8)                     100 parts by weight

Vinyl chloride-vinyl acetate copolymer

                                         20 parts by weight

Polyurethane resin                        8 parts by weight

Lecithin                                  2 parts by weight

Methyl ethyl ketone                     100 parts by weight

Cyclohexane                             100 parts by weight

The above coating type perpendicularly magnetizable layer can also be formed by coating with a paint comprising, for example, a ferromagnetic powder of hexagonal ferrite (mean grain size: 0.1 to 0.2 μm) dispersed in a binder similar to the above used and by subsequent orientation in a magnetic field followed by drying.

The above in-plane magnetizable continuous thin film may be formed by the vacuum evaporation method such as the oblique evaporation method, for example, using an evaporation source of Co-Ni in a vacuum of $10^{-5}$ Torr, at an angle of incidence of 60° and at a depositing rate of 800Å/sec. Alternatively, it may be formed by the sputtering method (for example, using the Fe target and Ar-$O_2$ atmosphere).

As the means to deposit a magnetic material on the substrate for the formation of the above iron oxide based perpendicularly magnetizable film, there are available the vacuum evaporation method in which constituent atoms of the magnetic layer to be formed are emitted and projected (the evaperation in an electric field and ion plating also belong to this method), as well as the sputtering method.
Among these methods, one making use of the opposing targets
sputtering system is preferable for use.

Fig. 5 shows an opposing targets sputtering system.

In this figure, a vacuum chamber 1 is evacuated by an air
suction system 2 comprising a vacuum pump, etc. while a gas
introduction system 3 is used to introduce a given kind of gas
into the vacuum chamber 1 to an internal gaseous pressure of
about $10^{-1}$ to $10^{-4}$ Torr. A pair of targets $T_1$ and $T_2$ held by
a target holder 4 are opposingly disposed in parallel to each
other to provide the opposing target electrodes. In the space
between these targets, a magnetic field is formed by a
magnetic field generation means (not shown). On the one hand,
a substrate 6 on which magnetic thin films are to be formed is
held by a substrate holder 5 laterally between the above
opposing targets in a direction perpendicular to these
targets.

In the sputtering system as constructed above, a magnetic
field is formed perpendicular to both opposing surfaces of the
parallel pair of opposing targets $T_1$ and $T_2$. Because of this
magnetic field, · electrons, which are emitted from each
target as it is hit and shocked by sputtered gaseous ions
under acceleration in the electric field of the cathode drop
region (namely, the region between the target $T_1$ or $T_2$ and the
plasma atmosphere produced between these targets), are confined in the space between the targets to move toward the opposing target on the other side. Near that target, electrons are repulsed by the cathode drop region. They thus repeat a reciprocating motion between the targets $T_1$ and $T_2$ while being confined by the magnetic field. During such reciprocating motion, electrons collide against ambient neutral gas atoms or molecules for generation of corresponding ions and electrons. These products further facilitate emission of electrons from the targets and ionization of the ambient gas. As a result, plasma is generated at a high density in the space between the targets $T_1$ and $T_2$, which results in satisfactory sputtering of the target material and efficient deposition of the magnetic material on the substrate 6 located laterally.

As compared to other projection means, the above opposing targets sputtering system has such merits that highspeed sputtering allows film formation at a high depositing rate and that since the substrate is not exposed directly to the plasma, the film can be formed at a lower temperature of substrate. Further, in the opposing targets sputtering system, since the sputtered magnetic material impinges on the surface of substrate with an energy smaller than in the ordinary sputtering system, the material can readily be deposited with an orientation in a desirable direction for easy formation of a film having a structure suitable to perpendicular magnetic recording.

An example of fabricating a magnetic recording medium with use of the above sputtering system is described below.

The following fabricating condition was used:

| | |
|---|---|
| Target material | Iron (containing 1 atomic percent of Co) |
| Substrate material | Glass |
| Distance between opposing targets | 100 mm |
| Magnetic field in sputtering space | 100 Oe |
| Target shape | 5 mm thick disk, 100 mm dia. |
| Distance from substrate to target end | 30 mm |
| Back pressure in vacuum chamber | $10^{-6}$ Torr |
| Introduced gas | $Ar + O_2$ |
| Pressure of introduced gas | $4 \times 10^{-3}$ Torr |
| Power consumption of sputtering system | 420 W |

A magnetic recording medium having an iron oxide based magnetic recording layer was thus formed on the substrate 6. To estimate characteristics of this magnetic recording layer, this layer was analyzed on an X-ray microanalyser (XMA) for its chemical composition, the state of its iron oxide was examined by X-ray diffraction, and magnetic characteristics were tested on a testpiece vibration type magnetometer. Characteristics of the above layer were thus estimated as follows.

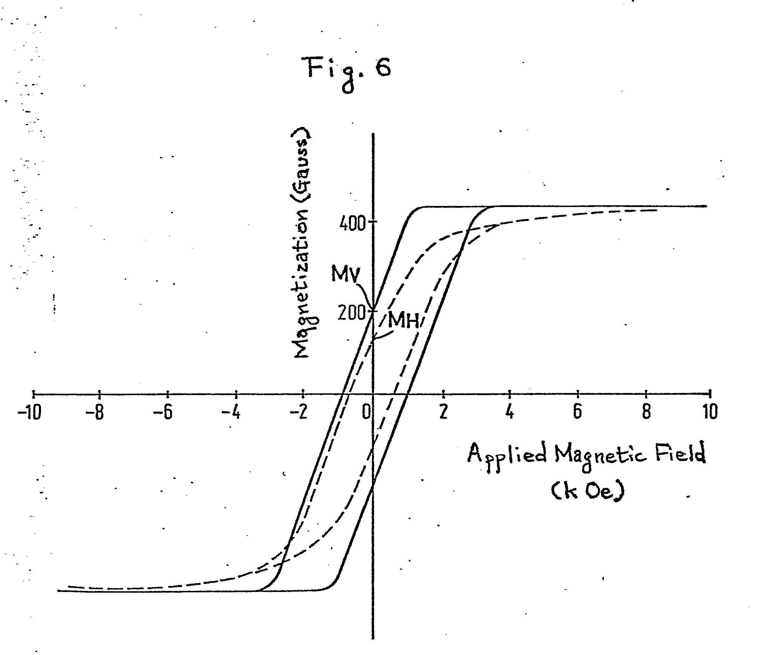

First, the ratio of the in-plane residual magnetization ($M_H$) to the perpendicular residual magnetization ($M_V$) was estimated to $M_V/M_H \geqq 0.5$. Namely, there were plotted the hysteresis loop for the in-plane magnetization and the one for the perpendicular magnetization as indicated by the interrupted and solid lines, respectively, in Fig. 6 and $M_H$ and $M_V$, which were defined as magnetizations at the vanishing magnetic field, were estimated. Since the former hysteresis loop was smaller than the latter, the inequality $M_V \geqq 0.5\ M_H$ was evident, proving formation of a magnetic recording layer favorable for perpendicular magnetization. This is a quite surprising fact with the iron oxide based magnetic layer.

Further, this magnetic recording layer was analyzed for its composition on an XMA (Hitachi Model "X-556" KEVEX-7000). The main peak was identified with Fe and a small Co content was detected. Beside, to examine the state of iron oxide, measurements were made on an X-ray diffractometer (Japan Electron Optics Lab. Model "JDX-10RA"; CuK$\alpha$ tube used). As seen from the following table, the principal component of the magnetic layer was found to be iron oxide. Further, it

| Angle of reflection | Assignment | | Reflection intensity |
|---|---|---|---|
| 2 (degree) | $Fe_3O_4$ | $\gamma-Fe_2O_3$ | observed, % |
| 17.9 | (111) | | 64 |
| 21.8 | | (200),(006) | 100 |
| 25.6 | | (204) | 59 |
| 31.3 | | (222) | 44 |
| 35.3 | (311) | | 53 |
| 37.2 | | (226) | 35 |
| 42.7 | (400) | | 53 |

was found by electron microscopy that the above magnetic recording layer had a regularly ordered structure in the direction perpendicular to the plane of layer.

It is noted that before sputtering for film formation, it is preferable to clean or bake the surface of substrate by bombardment with $Ar^+$ ions in the same sputtering system or treat the same surface under exposure to high frequency radio waves there.

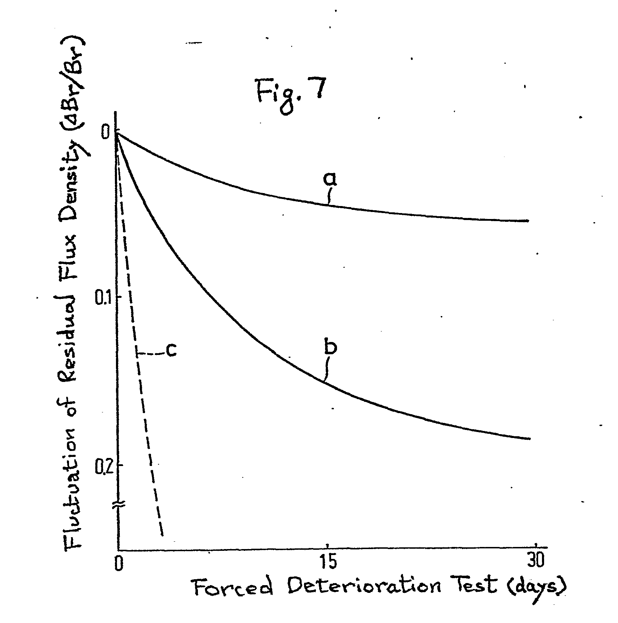

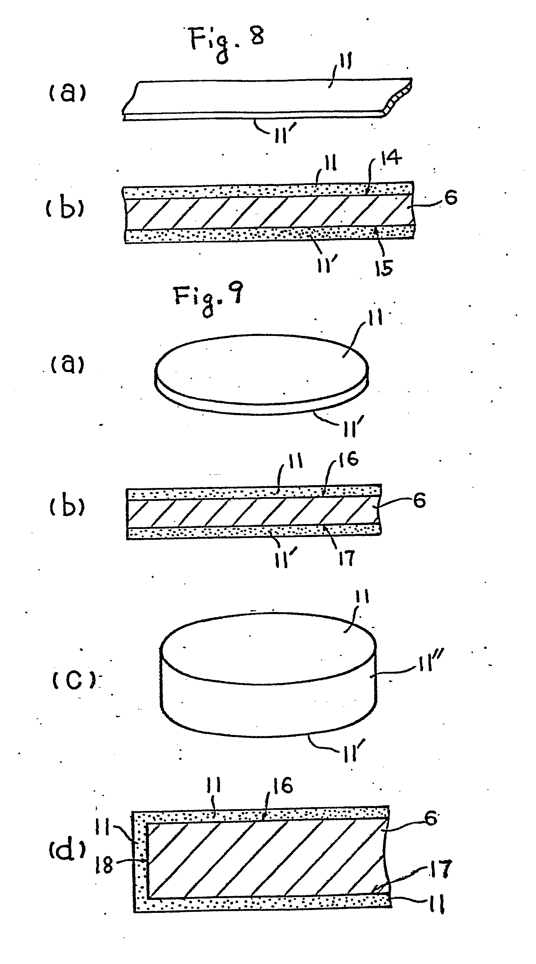

The next point is that since the magnetic layer is based on an iron oxide, the magnetic recording medium embodying the present invention performs remarkably better in the mechanical and chemical stability, etc. as compared to the conventional Co-Cr based magnetic layer. In a forced deterioration test made at 80°C, 85% RH, a medium of the present invention making use of an iron oxide based magnetic layer and a medium making use of a Co-Cr based magnetic layer exhibited time-dependent changes in the residual magnetic flux density Br as shown by curves (a) and (b), respectively, in Fig. 7 ( Br: change in residual magnetic flux density) on a testpiece oscillation type magnetometer (manufacturer: Toei Kogyo Co., Ltd.). These results show that the iron oxide based magnetic layer deteriorates substantially less in Br than the Co-Cr based magnetic layer. It is noted that a slight drop of Br/Br detected also form the former layer could probably be accounted for by partial phase transition from $Fe_3O_4$ to $\gamma$-$Fe_2O_3$. It is also noted that on an observation after a month (30 days) spotting, clouding, rusting, etc. were detected from the surface of Co-Cr based magnetic layer while no change was observed in the surface of iron oxide based magnetic layer.

The same deterioration test as above was made with a sample of known Tb-Fe based magnetic recording layer. The interrupted curve in Fig. 7 shows the result. It was found that the Tb-Fe based layer has poor characteristics exhibiting a sharp change with time and losing the magnetization almost completely only in about 5 days.

In the magnetic recording media embodying the present invention, various possible combinations of magnetic recording layers (upper and lower) are summarized in the following table.

| Layer | Magnetic recording media | | | | | | | | |
|---|---|---|---|---|---|---|---|---|---|
| | No.1 | No.2 | No.3 | No.4 | No.5 | No.6 | No.7 | No.8 | No.9 |
| **Upper:** | | | | | | | | | |
| Magnetizable axis | ↑ | ↑ | → | → | ↑ | ↑ | ↑ | ↑ | ↑ |
| Coating type | | | □ | | | □ | | | |
| Continuous thin film type | ◎ | ◎ | | ○ | ◎ | | ◎ | ○ | ◎ |
| **Lower:** | | | | | | | | | |
| Magnetizable axis | → | → | ↑ | ↑ | ↑ | ↑ | ↑ | ↑ | ↑ |
| Coating type | □ | | | | □ | | | | |
| Continuous thin film type | ○ | ◎ | ◎ | | ◎ | ◎ | ◎ | ◎ | ○ |

The meaning of the symbols used in the above table are:

↑ : Perpendicular magnetizable axis

→ : In-plane magnetizable axis

◎ : Iron oxide based perpendicularly magnetizable film

○ : Conventional continuous thin film type magnetic film

□ : Conventional coating type magnetic film

In the present invention, if two layers upper and lower layer are used in combination, it is possible to form 9 different types of structure as in the above table, among which medium Nos. 1, 2, 5, 7 and 9 having an iron oxide based perpendicularly magnetizable film as the upper layer (namely, on surface side) are preferable with respect to the time-dependent change, wearproof property, contact with the magnetic head, etc.

It is noted that the present invention can also be applied to magnetic recording media having three or more laminated magnetic recording layers that include at least one iron oxide based perpendicularly magnetizable layer.

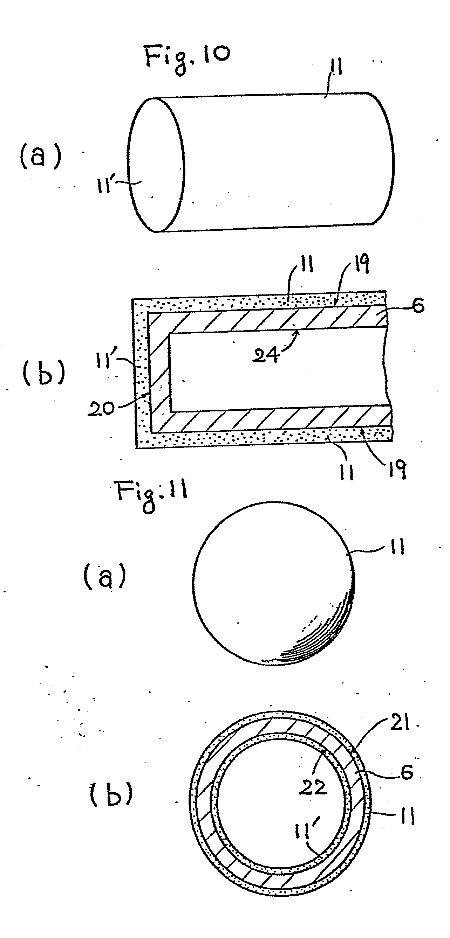

Figs. 8 to 11 show examples of various magnetic recording media that conform to the second major claim of the invention.

Fig. 8 (a) and (b) refer to an example of magnetic tape wherein both principal surfaces 14 and 15 (namely both faces) of the tape base 6 are individually provided with iron oxide based perpendicularly magnetizable films 11 and 11'.

Fig. 9 (a) and (b) refer to an example of magnetic disk wherein both principal surfaces 16 and 17 of the disk substrate 6 are individually provided with iron oxide based perpendicularly magnetizable films 11 and 11'. Further, Fig. 9 (a) and (b) refer to another example of magnetic disk wherein the disk substrate 6 is thicker and its outer circumferential surface 18 is also provided with an iron oxide based perpendicularly magnetizable film 11".

Fig. 10 refers to an example of magnetic drum wherein in addition to an iron oxide based perpendicularly magnetizable film 11 formed on the outer circumferential surface of the cylindrical substrate 19, another iron oxide based perpendicularly magnetizable film 11' is provided on each side end surface 20 of that cylinder.

Fig. 11 refers to an example of magnetic recording medium wherein the outer and inner surfaces 21 and 21' of a spherical substrate shell are provided with iron oxide based perpendicularly magnetizable films 11 and 11', respectively.

In the above examples, only essential parts of individual magnetic recording media are shown schematically. A new and unique structural feature that media of prior art are deficient in is that among the magnetic layers formed on a plurality of surfaces of substrate, there is one or more magnetic layers (two layers in the above examples) which are provided in the form of iron oxide based perpendicularly magnetizable film. With the above construction, since a plurality of surfaces of the medium can be used for magnetic recording and at least one of them for perpendicular magnetic recording, the recordable signal volume can be increased twice or more. On surfaces other than those on which the iron oxide based perpendicularly magnetizable film is formed, the coating type or continuous thin film type magnetic layer as already mentioned can be formed. Though omitted in the above figures, a plurality of magnetic heads for recording and playback (they may be of optical recording/playback type) are properly disposed in sliding contact to individual magnetic films on surfaces of the medium. It is noted that different kinds of recording signal may be used for magnetic film recording on individual surfaces for independent playback or for simultaneous playback and synthesis.

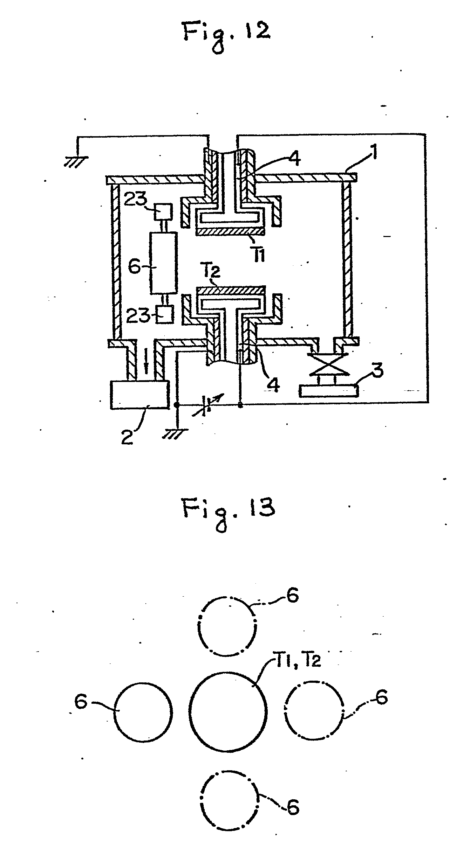

To form magnetic films in the above magnetic recording media, an opposing targets sputtering system as in Fig. 12 that is a version of Fig. 5 can be used in a similar condition.

In Fig. 12, sputtering is made while a drum driving mechanism 23 drives, for example, 10 rpm a cylindrical drum substrate 6, for example, of 3 mm thick Al alloy wall to deposit a magnetic film on the outer circumferential surface thereof. Also both side end faces of the substrate 6 are further subjected to sputtering similar to the above for depositing magnetic layers thereon.

In Fig. 13, a set-up of substrates 6 relative to the target $T_1$ (or $T_2$) is shown in a plan view. If a plurality of substrates 6 (for example, 4 pieces) are disposed around the target as indicated by dot-bar chain lines and they are simultaneously treated for formation of a magnetic film, the mass production can be made efficiently.

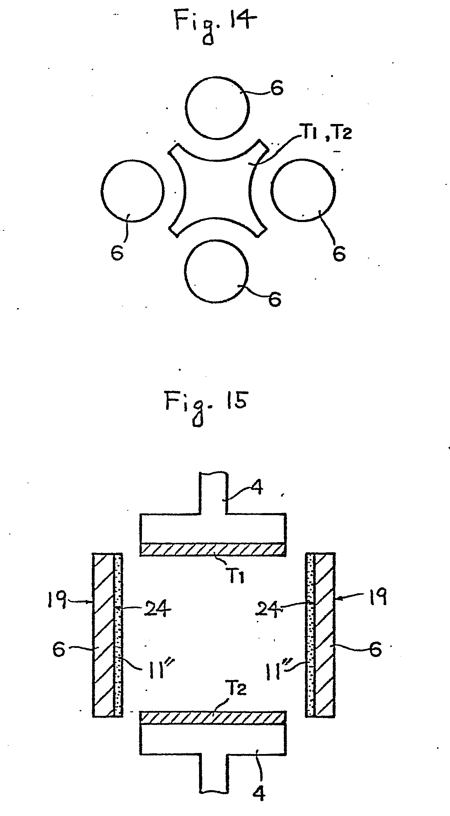

In Fig. 14, the target T1 (or T2) is shaped in conformity to the circumferential surface configurations of individual substrates 6. More uniform and effective sputtering can thus be achieved to the circumferential surfaces of these substrates 6.

The internal surface of the substrate 6 may also be provided with a perpendicularly magnetizable film. In the

- 37 -

example of Fig. 10, for example, a magnetic film can be formed on each of the outer and inner circumferential surfaces 19, 24 of a cylindrical drum substrate 6. Sputtering to the inner surface 24 is made with a drum substrate 6 disposed so its wall may surround the targets $T_1$ and $T_2$ as in Fig. 15, which results in deposition of an iron oxide based perpendicularly magnetizable layer 11" on the inner surface 24. Further, if the two sputtering methods of Figs. 12 and 15 are combined, simultaneous sputtering to both the inner and outer circumferential surfaces of drum substrate can be performed for simultaneous deposition of magnetic films on these surfaces.

In Fig. 16, vacuum evaporation is used wherein the evaporation source 26 of a magnetic material (for example, Fe) is disposed in the inside space of drum substrate 6 and heated by the heater 27 under introduction of oxygen gas. An iron oxide based perpendicularly magnetizable layer 11" can thus be deposited on the inner surface 24 of the substrate 6. It is noted that if the substrate 6 is driven in the sense of a circular arrow 28 while being moved straight along a straight arrow 29, a magnetic layer can be formed uniform.

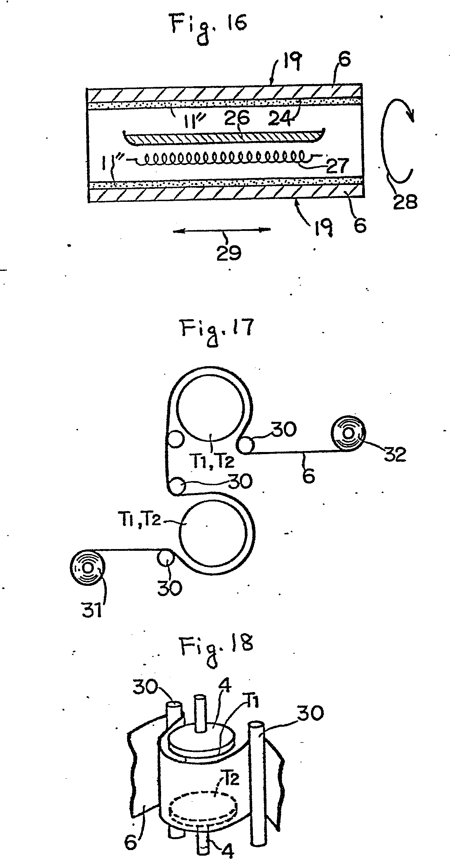

Figs. 17 and 18 show a method to form a perpendicularly magnetizable film on both sides of a tape substrate or tape base 6. Two pairs of targets $T_1$ and $T_2$, each as already mehntioned, are disposed properly and the tape base 6 is guided by tape guides 30 and guide plates (not shown) around the outer circumferential surfaces of each pair of these targets for simultaneous sputtering. The tape base 6 is continuously fed from an unwider reel 31 to a rewinder reel 32. After sputtering, the base 6 is slit into final product tapes of a prescribed width.

Next, concrete examples of the above methods and media are described below.

For example, on both surfaces of a polyethylene terephthalate substrate finished to the surface roughness Rmax = 0.1 μm was formed an iron oxide based perpendicularly magnetizable film 7,000 $\overset{\circ}{A}$ thick and having a coercive force of Hc = 1,000 Oe by the opposing targets method. Thereafter, it was cut into a magnetic disk. The recording/playback characteristics of this disk were tested using a ring type head of 100 μm track width at an effective gap of 0.3 μm.

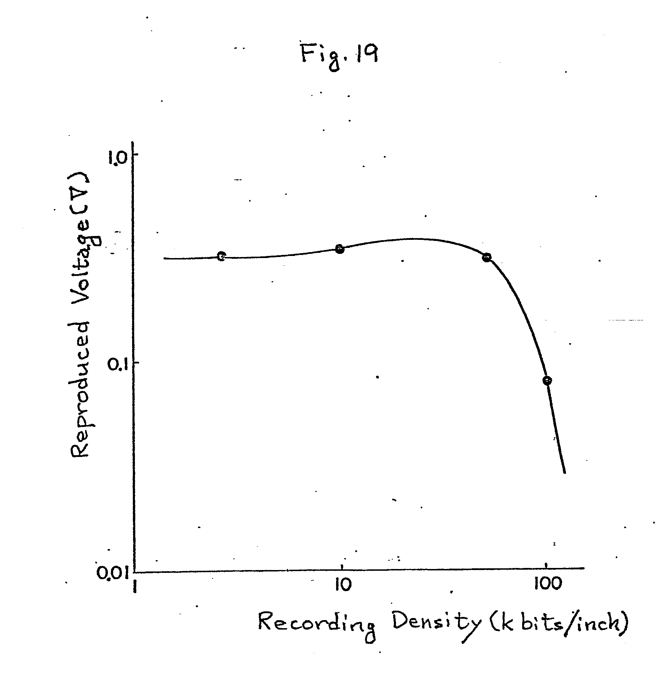

Fig. 19 shows data of the pick-up voltage from the above magnetic disk, which proves a high output at a high recording density.

Further, the above magnetic recording medium embodying the invention exhibited favorable magnetic characteristics similar to Figs. 6 and 7.

Next, a photomagnetic memory system will be described that differs from the magnetic recording system as mentioned above.

In this type of photomemory, if no tracking guide is provided on the recording medium, a high mechanical accuracy is necessary to address the laser beam to an arbitrary position for high density recording.

On the one hand, with the progress of semiconductor technology, the miniaturized lightweight optical write/read unit has been made available. As a result, it is possible to achieve a construction wherein tracking guides are formed on the memory medium so the optical recording/playback head may be moved relative to these guides.

For example, a photomemory 31 is known wherein in a recording layer 30 on a substrate 32, a number of grooves 33 are formed at intervals for use as tracking guides. In the recording layer 30 with tracking guides, a laser beam 35 as indicated by dot-bar chain arrows is applied to write in a convex area 34 while another read laser beam 35 as indicated by solid arrows is applied for reflection from a photoreflective film (not shown) with which the whole surface is covered so the recorded information may be read from the reflected beam under tracking control that makes use of the phase difference of the reflected beam that appears as it is reflected from the convex area 34 and from groove 33. If a light spot is applied in a width that partically includes the area of grooves 33, therefore, the photorecording/playback head can be moved in a fixed track along the grooves 33 under the control of a tracking servo. However, the photomemory as
mentioned above has a difficulty that the light is reflected
irregularly from corners at stepped potions bordring
individual convex memory areas, so the accuracy of track
detection is lowered that much.

On the other hand, as a photomemory with which
information can be recorded, played back and erased, a
photomagnetically recordable memory is known in a
recording/playback system making use of a linearly polarized
light. As a photomagnetic recording medium used for such
photomagnetic recording system, a medium is known wherein in
its photomagnetic recording layer of perpendicular anisotrophy
inverted magnetic domains that are opposed to the uniform
magnetic polarity are selectively formed with use of a laser
beam or the like for information recording. To read out the
information thus written, a magnetooptic effect, namely,
"magnetic Kerr effect" or "Faraday effect" is used. In this
case, a phenomenon that under such magnetooptic effect the
reflected beam changes its plane of polarization differently
depending on the direction of magnetization (namely, the plane
of polarization of light reflected from inverted magnetic
domains is turned relative to light reflected from
non-inverted domains) is used in the signal detection from the
reflected beam by a photodetector.

A merit of the above photomagnetic recording system is that a high recording density can be achieved on rewritable basis.  Another merit is that it is highly reliable since the head (lens) and recording medium need not be brought in contact both on recording and playback.

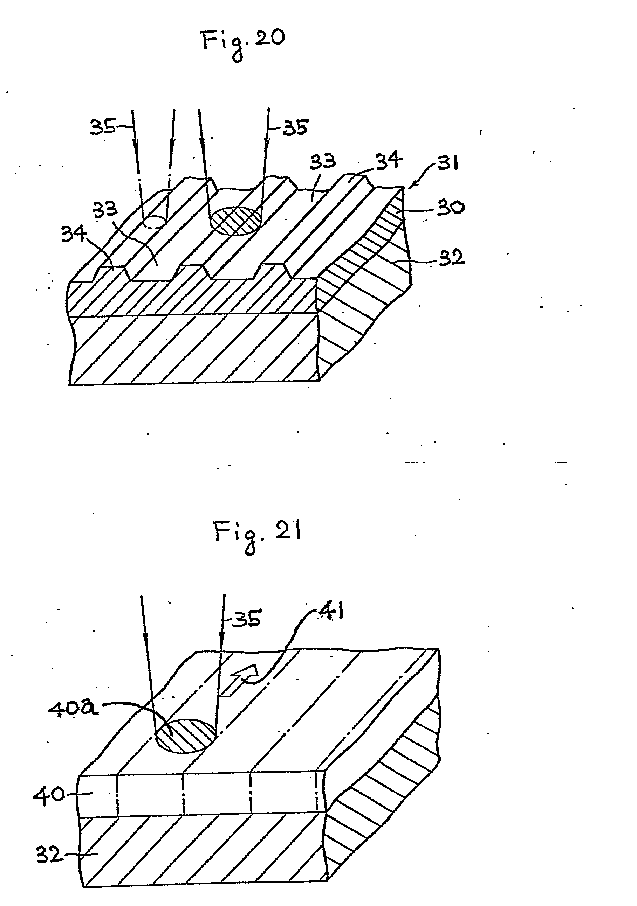

In the above photomagnetic recording system, it is conceivable to form tracking guides on the recording layer as shown in Fig. 20 in such a construction that tracking can be made.  Since the magnetic Kerr effect or Faraday effect is used with a linearly polarized light, a lowered intensity of laser beam is projected onto the medium, so if there is irregular reflection from the stepped edges as mentioned above, the linear polarization is disturbed to cause noise contamination, making the photodetection of signal difficult.

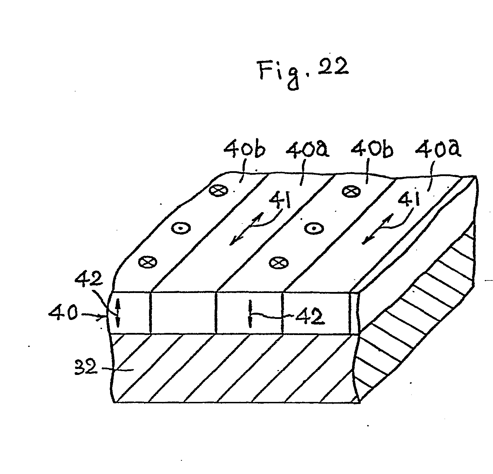

As disclosed in Japanese Patent Opening No. 61031/1981 as a technique to prevent the above weak point, there is known a medium wherein, for example, as shown in Fig. 21, a thin film of an amorphous alloy, such as Gd-Fe, Tb-Fe, or Cd-Co, having the perpendicularly magnetizable axis is formed on a substrate 32.  With the above photomagnetic memory, a thin film 40 is exposed selectively in a parallel striped pattern to an Ar laser beam 40 for heat treatment.  As shown in Figs. 21 and 22, the areas 40a exposed to the laser beam 35 are thus crystallized. Making use of the effect of form anisotrophy, a magnetization parallel to the in-plane direction 41 is then established there.  Therefore, the exposed areas 40a become different in the direction of magnetization from the recording areas 40b left unexposed that are magnetized in the direction 42. As a result, the exposed areas 40a no more contribute to the photomagnetic recording being available as tracking guides.

When studying the above photomagnetic memory, however, the present authors have discovered the following fatal defects:

(1) Since the thin film is formed in an amorphous state, it changes with time and the medium is poorly stable to the environmental condition being oxidized and crystallized resulting in deterioration of the optical and magnetic characteristics.

(2) Since the amorphous thin film 20 exhibits only a small angle of Kerr rotation that is about 0.4 degree at most, a satisfactorily high pick-up output cannot be attained, resluting in a poor S/N ratio.

(3) For formation of tracking guides 20a, the amorphous material is heated by a laser beam for crystallization. However, heat (namely, energy of laser beam), as it builds up on such crystallization, readily propagates laterally, so it often occurs that the crystallized areas do not conform to the expected size. As a result, the formed tracking guides have a poor pattern accuracy.

(4) For the above crystallization, it is necessary to heat the thin film to a high temperature of about 400°C or over by the laser beam, so it is necessary to have a high power laser, which has demerits of the more complicated operation and higher cost.

The present authors thus hit an idea to apply the perpendicularly magnetizable film as mentioned above (for example, film 11 of Fig. 1) to the design of above photomagnetic memory. They have successfully obtained a magnetic recording medium on which tracking guides can be readily formed at high pattern accuracy and which gives a high pick-up output performing favorably with respect to the time-dependent deterioration characteristic.

Namely, a medium was thought of wherein in an iron oxide based magnetic film with an residual magnetic anisotrophy of $M_V/M_H \geq 0.5$ areas whose magnetic characteristics are selectively changed (namely, areas suitable for use as tracking guides) are formed. With the above magnetic recording medium, since an iron oxide based magnetic film is used for the magnetic recording layer, it is possible to perform recording/playback at a favorable S/N ratio with a stable pick-up output.

In the above magnetic film, areas where the magnetic characteristics (particularly the magnetoptic constant, magnetization, coercive force, etc.) are selectively changed can be used for tracking guides as already mentioned. To form such areas, it is only necessary to change the crystalline structure (for example, from $Fe_3O_4$ to $\alpha$-$Fe_2O_3$) by exposure to a laser beam or by other proper means, so only a small heat energy is necessary. For example, a temperature of about 300°C gives a satisfactory result. Therefore, there is less lateral heat propagation, tracking guides can be formed in accurate areas. There are also merits with respect to the operation and cost.

It is noted that the above medium is not grooved as in Fig. 20, so the surface of its magnetic recording layer can be flattened. In this case, since no noises are generated due to the irregular reflection of light, an effect that the playback may be performed favorably can naturally be exerted.

Referring to Fig. 1, the medium as mentioned above is fabricated by forming an upper photomagnetic recording layer comprising an iron oxide based magnetic film 11 of $M_V/N_H \geq 0.5$ and a lower magnetic layer 10 on a substrate 6.

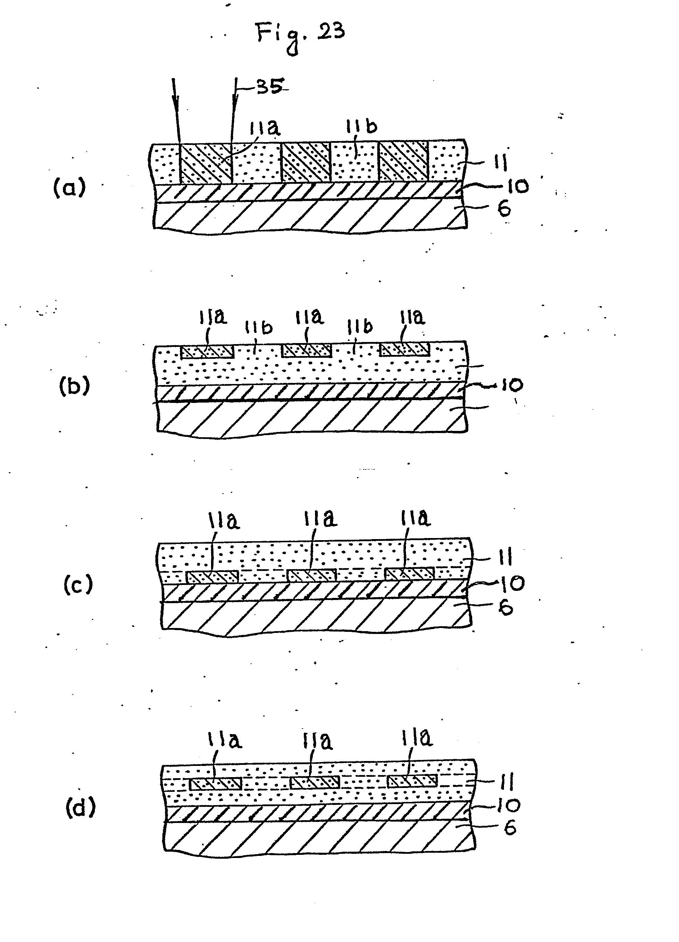

Fig. 23 (a) is an example of such medium wherein selected areas of magnetic layer 11 are exposed to a laser beam 35 as shown in Fig. 21 to selectively change magnetic characteristics (magnetooptic constant, magnetization) there. The exposed areas 11a changed as above can be formed by heating to 300°C (particularly, in case of phase transition from $\gamma$-$Fe_2O_3$ to $\alpha$-$Fe_2O_3$) under exposure to the laser beam 35. Depending on the iron oxide material used, these areas undergo changes in the crystalline structure and/or lattice constant as described below. They are drastically different from the
unexposed photomagnetically recordable areas 11b in
magnetooptic constants (angle of Kerr rotation, angle of
Faraday rotation). For this reason, the areas 11a are
effectively perform as tracking guides.

<u>Before exposure to laser beam</u>  <u>After exposure to laser beam</u>

|  |  |
|---|---|
|  | Fe (cubic) |
| $Fe_3O_4$ (cubic) | $\alpha$-$Fe_2O_3$ (rhombohedral) |
|  | $\gamma$-$Fe_2O_3$ (cubic) |
|  | FeO (cubic) |
|  | $\alpha$-$Fe_2O_3$ (rhombohedral) |
| $\gamma$-$Fe_2O_3$ | FeO (cubic) |
|  | Fe (cubic) |

The above change in the crystalline structure (after a
change, the crystals may be of a single crystalline system or
a mixture of two or more crystalline systems) presents itself
as a change in magnetooptic constants. Likely factors
responsible for the latter change are changes in the
magnetization and ratio of the divalent to the trivalent iron
atom. Such change in the crystalline structure can be caused,
for example, by heating to about 300°C in air. In an
oxidative atmosphere, however, a successful treatment is
possible at a lower temperature. Beside the change in the
crystalline structure as mentioned above, a change in the
lattice constant (this can be achieved by adding a metal and/or nonmetal element or elements and/or their oxide to the iron oxide) can also cause a change in magnetooptic constants. The following table summarizes lattice constant data.

| | Lattice constant (Å) | ASTM card |
|---|---|---|
| FeO | 4.037 | 6-0615 |
| $Fe_3O_4$ | 8.390 | 7-322 |
| $\gamma-Fe_2O_3$ | 8.350 | 4-0755 |
| $\alpha-Fe_2O_3$ | 5.43 | 6-0502 |
| $CoO-Fe_2O_3$ | 8.33 | 3-0864 |

For the heating means to cause the above change, beside the laser (for example, the He-Ne laser), a resistance heating method, direct heating or indirect radiation heating method using a halogen lamp or the like can be used as far as selected areas can be heated.

Fig. 23 (b), (c) and (d) are examples wherein tracking guides 11a that differ from the photomagnetic recording areas 11b in magnetoptic constants are formed in the surface, middle, and bottom level of magnetic layer 11, respectively. As in the case of Fig. 23 (a), it is possible to have a change in the angle of Kerr or Faraday rotation for photodetection while maintaining the reflection condition that is free from any irregular reflection of light.

In the examples of Fig. 23 (b) to (d), the tracking guides 11a are preferably 20 Å to 5 µm deep and more

preferably 50 Å to 2 µm deep. With a depth smaller than 20 A, the magnetooptic constants do not change much while a depth above 5 µm is liable to degrade the pattern accuracy due to spreading of heat. Further, to form the areas 11a, it is possible to laminate the first magnetic layer with the second magnetic layer as indicated by the interrupted line in Fig. 23 (c) after exposing the above first layer to a laser beam. It is noted however that all the constructions of Fig. 23 (b) to (d) can not only be fabricated by a selective heat treatment of the upper, middle or lower layer of such laminated multiple layers but by exposing a single magnetic layer to a laser beam with the energy Rp of laser beam selected in such a manner that individual areas 11a may be formed at a prescribed depth.

Further, as already mentioned, the heat treatment can also be conducted in various atmospheres other than air as described below.

(1) In an oxidative atmosphere:

A heat treatment (for example, by exposure to a laser beam) in an atmosphere whose oxygen partial pressure is $10^{-2}$ to 10 atmospheric pressure results in an effective conversion from $Fe_3O_4$ to $\alpha$-$Fe_2O_3$ and $\gamma$-$Fe_2O_3$ or $\gamma$-$Fe_2O_3$ to $\alpha$-$Fe_2O_3$ by oxidation. With the oxygen partial pressure of atmosphere below $10^{-2}$ atmospheric pressure, only a weak oxidative effect is attained while if this partial pressure is raised above 10 atmospheric pressure, a large system is necessary. An oxygen partial pressure of $10^{-1}$ to 2 atmospheric pressure is more preferable.

(2) In a reductive atmosphere:

A heat treatment in an atmosphere containing $H_2$, CO, $NH_3$, or methanol at a partial pressure of $10^{-2}$ to 10 atmospheric pressure and preferably $10^{-1}$ to 2 atmospheric pressure can reduce $Fe_3O_4$ to Fe and FeO or $\gamma$-$Fe_2O_3$ to $Fe_3O_4$, FeO and Fe, respectively.

(3) In an inert gas:

A heat treatment in an inert gas of He, Ne, Ar, Kr or Xe or in a mixed gas comprising the above inert gas and an oxidative or reductive gas is also possible wherein the partial pressure of the oxidative or reductive gas may be as mentioned above.

Next, in an actual experiment, an iron oxide based perpendicularly magnetizable film was formed on a glass substrate by the opposing targets method as described later. The film thus formed was scanned by a laser beam from a He-Ne laser (50 mW) for a change in the crystalline state as mentioned above to form tracking guides for the photomagnetic memory. On the other hand, as a control, a perpendicularly magnetizable film based on a known amorphous Tb-Fe alloy was deposited on a glass substrate and tracking guides were formed by the same method as above. In these cases, the following laser outputs were necessary for effective formation of these guides when estimated on the surface of film.

<u>Perpendicularly magnetizable film</u>     <u>Laser output (mW)</u>

Iron oxide (present invention)                    10

Amorphous Tb-Fe (control)                         13

It follows from these results that in both media the intended guides can be successfully formed even with a laser of low output.

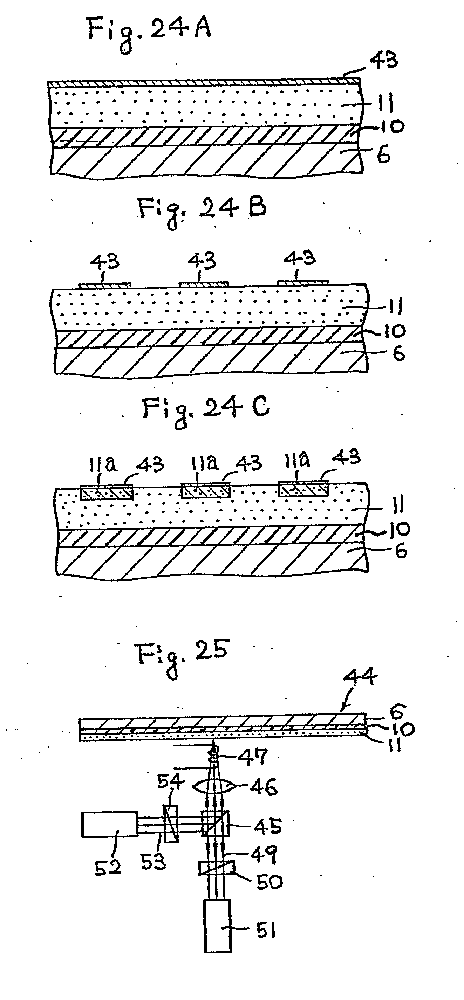

Fig. 24 is an example of a process of tracking guide formation in which the magnetic layer 11 is doped with a metal, for example, with Co to form areas 11a that have a different lattice constant.  Namely, as in Fig. 24 A, a magnetic layer 11 is formed on a substrate 6 and further a Co film 43 is deposited on the whole surface.  Next, as shown in Fig. 24 B, the Co film 43 is etched into a prescribed pattern by the technique of photolithography.  Next, as shown in Fig. 24 C, heating to a rather moderate temperature of 300°C then thermally diffuses Co from the etched pattern of Co film 43 straight down into the magnetic layer 11 to form tracking guide areas 11a that are doped with Co to have a lattice constant different from other areas.  In the above process, since Co has a high diffusion coefficient, a rather moderate temperature as mentioned above can achieve satisfactory diffusion.  After the step of Fig. 24 C, Co left in the surface is removed by etching, when a medium corresponding to Fig. 23 (b) is available.

Fig. 25 shows major parts of a photomagnetic memory system making use of the above photomagnetic recording medium. As a photomagnetic recording medium, for example, a disk-shaped medium 44 is rotatably mounted. A laser beam 35 from a laser light source 52 that comprises a semiconductor laser or the like passes across a polarizer 54, reflected by a half-mirror 45 and further passes across a lens 46 and coil 47 to impinge onto the surface of a photomagnetic recording layer 10 of disk 44 for spotting there. The reflected beam 49 reverses the path and passes across the half-mirror 45 and analyzer 49 to impinge onto a photodetector 51. Reading and writing can be performed by making common use of the above optical system. In this case, what is necessary is only to use a higher laser power for writing than for reading.

It is noted that before the above recording operation is started, the recording layer 11 of disk 44 is heat treated in selected areas using a laser (for example, He-Ne laser) to form tracking guides.

The above magnetic recording medium is suitable as a photomagnetic memory, but for this application alone, the above magnetic layer 10 is not always necessary. It is noted however that this medium is not limited to the use as the photomagnetic memory but it is applicable as those media that make use of an interaction between electricity and magnetism on recording and playback of information, for example, the common magnetic disk, magnetic tape, magnetic card, etc. Namely, the above iron oxide based magnetic film formed on this medium not only exhibits a perpendicular magnetic anisotrophy but has areas that are selectively heat treated by a laser beam or the like to change the direction of magnetization locally there, so recording and playback can be performed under control of a tacking servo that makes use of the difference in the perpendicular magnetization between these areas (tracking guides) and adjacent perpendicularly magnetizable areas.

Another photomagnetic recording medium is also applicable as a photomagnetic memory wherein different from the medium of Fig. 23, an iron oxide based magnetic layer of $M_V/H_H \geqq 0.5$ is formed as the photomagnetic recording layer on a substrate 6 and in this magnetic layer grooves are formed as tracking guides in a striped pattern.

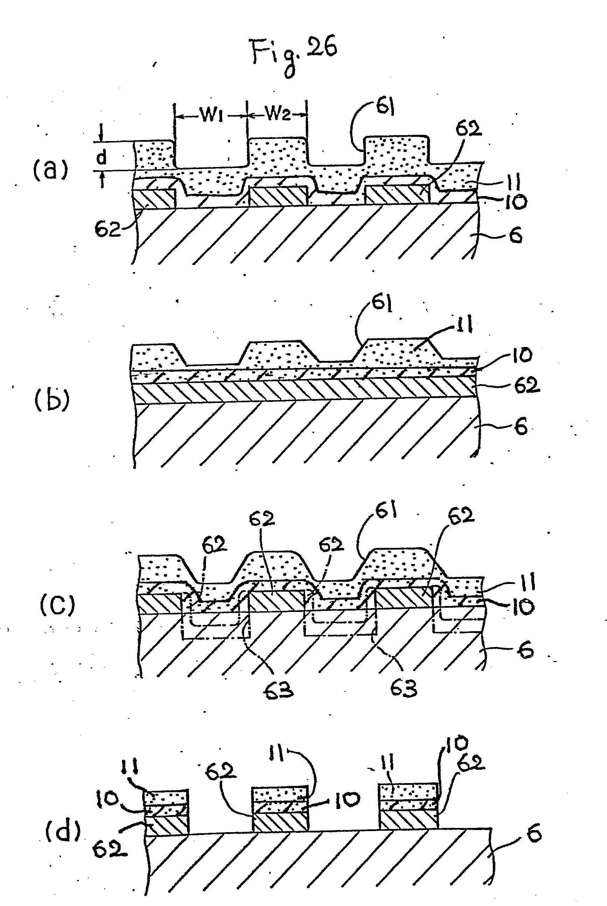

Fig. 26 (a) to (d) are examples of the above medium wherein in the magnetic layer 11 grooves 61 of striped pattern are formed as tracking guides in different cross sections (in the figure they are assumed to extend perpendicular to the page). In this figure, a photoreflective film 62 may be made of Al, Cu, Ag, Au or the like. In these examples, when a laser beam (not shown) is projected to write for recording and then read for playback, grooves 61 formed in the magnetic layer 11 can be used as tracking guides. Namely, by detection of the state of beams of light reflected from the bottom of the grooves and from the surface of the convex areas between such grooves (namely, the phase difference or difference in the reflection intensity between these two reflected beams) the tracking servo is given the necessary information to provide control.

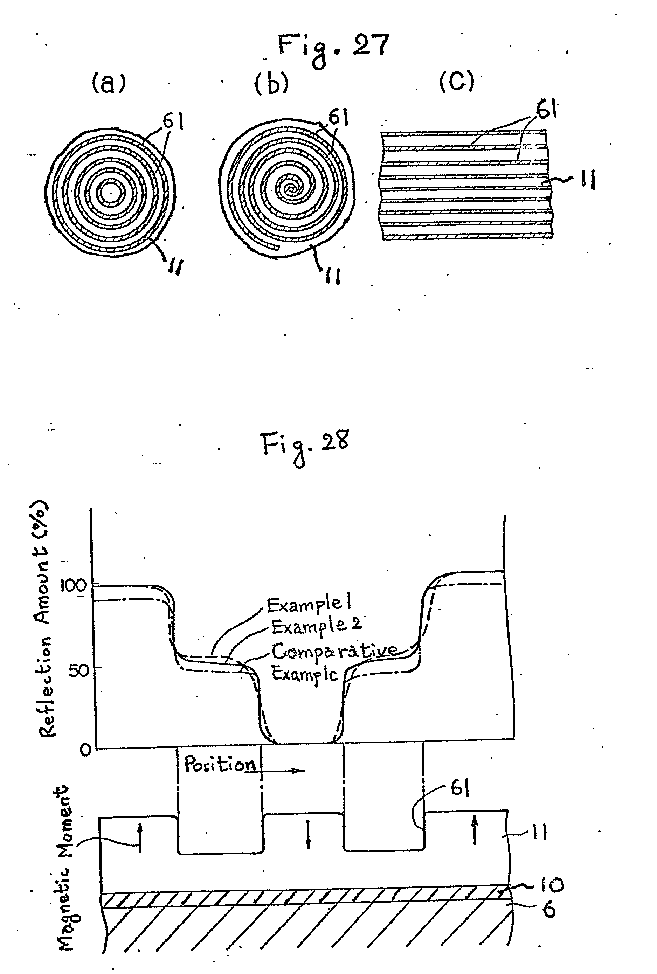

In examples of Fig. 26 (a) to (c), both the grooves 61 and the signal recording areas are preferably 0.2 to 5 μm wide each. The width of these grooves and signal recording areas is suitably determined according to the beam size (or the diameter of spotting beam) used. When the medium is used for the photomagnetic memory, a width of about 1 μm is preferable though it may be changed depending on the wavelength of the beam used and desirable recording density. Further, the depth "d" of grooves 61 is preferably 100 $\overset{o}{A}$ to 5 μm and preferably 500 $\overset{o}{A}$ to 3 μm. Grooves more shallow than 100 $\overset{o}{A}$ make it difficult to form the magnetic layer 11 in the form of a continuous thin film on the substrate 6, while with a depth over 5 μm, these grooves perform poorly as tracking guides. Fig. 27 (a) to (c) are a few different patterns of grooves 61 as viewed above. These patterns are applicable also to the guides as shown in Fig. 23.

Grooves 61 can be formed by various methods. For example, on the substrate 6, a metal, such as Al, Ti, V, Cr, Mo, Fe, Co, Ni, Cu, Zn, Ga, Ge, Se, Rb, Ta, Ru, Rh, Pd, Ag, In, Sn, Te, or Au, or a non-metal, or their oxide, nitride or other compound is deposited 100 $\overset{\circ}{A}$ to 5 μm thick and preferably 500 $\overset{\circ}{A}$ to 2 μm thick and this thin film is exposed to a beam of Ar laser for local heating and dissipation to leave a prescribed pattern of film. A magnetic layer 11 is then formed thereon, when grooves 61 as shown in cross section in Fig. 26 (a) or (c) are provided in conformity to the profile of given pattern. Alternatively, as shown by a dot-bar chain line in Fig. 26 (c), grooves 63 may be formed on the substrate 6 itself by scanning the latter with a beam from a high power Ar laser (50 to 100 mW) or by injection molding of the substrate material and then a photoreflective film 62 and magnetic layers 10, 11 may be sequentially formed in the whole surface. The thickness of this photoreflective film is preferably in the aforementioned range. If it is thinner than 100 $\overset{\circ}{A}$, there may occur, for example, interruptions at stepped portions of grooves 63 resulting in a discontinuous film while with a thickness above 5 μm the intended effect is not exerted fully. Further, in the example of Fig. 26 (b), the magnetic layer 11 formed on the reflective film 62 can be chemically etched (for example, by photolithography of known art) to an intermediate depth to form grooves 61. In the example of Fig. 26 (d), after a reflective film 62 and magnetic layers 10, 11 are sequentially formed on the whole surface, the magnetic layers 11, 12 and reflective film 62 are photoetched in a same pattern. Alternatively, first, a material that is readily soluble, for example, photoresist is deposited on the substrate 6 in the same pattern as the grooves 61 to be formed and then a reflective film 32 and magnetic layers 10, 11 are deposited for lamination in the whole surface. Next, a treatment with a solvent that dissolves the above photoresist is made to lift off the photoresist together with the reflective film and magnetic films thereon. The magnetic layers 11, 10, and reflective film 32 are thus removed properly to form grooves 61. It is noted that in the magnetic recording medium making use of the above magnetooptic effect, the photoreflective layer 62 is not always necessary, though its provision is preferable in some cases.

Example 1

Al was deposited on a substrate glass disk by the vacuum evaporation under a vacuum of $10^{-6}$ Torr to form an Al film 1,000 Å thick. The Al film thus formed was scanned by a laser beam of Ar laser (50 mW) to heat and dissipate selected areas thereof forming a 2 μm wide grooves in a striped pattern at pitches of 2 μm. Next, iron oxide based magnetic layers 10, 11 were formed 1,000 Å thick in the whole surface including these grooves.

To the recording medium with tracking guides thus formed, photomagnetic recording was made by a method of known art. It was then exposed to a laser beam under control of a tracking servo and the reflected beam was detected by an Avalanche photodiode for measurement.

Example 2

Polymethylmethacrylate was injection molded into a substrate disk with grooves 2 μm wide and 1,000 Å deep at pitches of 2 μm. On this substrate, magnetic layers 10, 11 were formed 1,000 A thick. A measurement of the reflected beam was then made as in Example 1.

Comparative example

For comparison, a disk medium was fabricated in the same method as in Example 1 except that amorphous Tb-Fe was used instead of iron oxide for the formation of magnetic layers, and a measurement of the reflected beam was made by the same method as above.

Fig. 28 summarizes data thus obtained from the above Examples and Control. The drawing in this figure shows a state that in the magnetizable areas between tracking guide grooves the magnetic moment is inverted between the recorded and·blank regions (the reflective film is omitted from the figure). It is evident from these results that as compared to a medium that is provided with amorphous Tb-Fe based magnetic layers media that are provided with an iron oxide based magnetic layer or layers according to the present invention give an almost equivalent or higher reflection intensity
resulting in playback characteristics of high pick-up output
at high S/N ratio.

It will be evident that various modifications can be made
to the described embodiments without departing from the scope
of the present invention.

WHAT WE CLAIM IS:

1. A magnetic recording medium having a plurality of laminated magnetic recording layers on a substrate wherein one or more of said magnetic recording layers satisfy the following two requisites:

    (a) Iron oxide based continuous magnetic layer; and

    (b) Ratio of the perpendicular residual magnetization $M_V$, namely residual magnetization perpendicular to the plane of layer to the in-plane residual magnetization $M_H$ or $M_V/M_H$ not smaller than 0.5.

2. A magnetic recording medium as claimed in Claim 1 wherein the particular crystalline axis of said iron oxide is almost perpendicular.

3. A magnetic recording medium as claimed in Claim 1 wherein said iron oxide is of spinel type.

4. A magnetic recording medium as claimed in Claim 1 wherein said laminated magnetic recording layers comprise said iron oxide based continuous magnetic layer and a layer which is one or the other of the following two layers:

    (a) Coating or continuous thin film type magnetic layer with its magnetizable axis in-plane; and

    (b) Coating or continuous thin film type magnetic layer with its magnetizable axis perpendicular.

5. A magnetic recording medium as claimed in Claim 1 wherein areas where magnetic characteristics are selectively changed

- 1 -

are formed in said magnetic recording layers.

6.  A magnetic recording medium as claimed in Claim 1 wherein grooves are formed in a stripped pattern in said magnetic recording layers.

7.  A magnetic recording medium having a magnetic recording layer or layers on each of two or more surfaces of a substrate and magnetic recording layer on at least one of said surfaces satisfies the following requisites:

    (a)   Iron oxide based continuous magnetic layer; and

    (b)   Ratio of the perpendicular residual magnetization $M_V$ to the in-plane residual magnetization $M_H$ or $M_V/M_H$ not smaller than 0.5.

8.  A magnetic recording medium as claimed in Claim 7 wherein the particular crystal axis of said iron oxide is almost perpendicular.

9.  A magnetic recording medium as claimed in Claim 7 wherein said iron oxide is of spinel type.

10.  A magnetic recording medium as claimed in Claim 7 wherein said substrate is shaped either tape-like or sheet-like.

11.  A magnetic recording medium as claimed in Claim 7 wherein said substrate shaped drum-like and a magnetic recording layer or layers are formed on each of the outer circumferential surface and outer side end faces thereof.

12.  A magnetic recording medium as claimed in Claim 7 wherein said substrate is hollowed and a magnetic recording layer or layers are formed on each of the outer and inner surfaces thereof.

13. A magnetic recording medium as claimed in Claim 7 wherein areas where magnetic characteristics are selectively changed are formed in said magnetic recording layer or layers.

14. A magnetic recording medium as claimed in Claim 7 wherein grooves are formed in a striped pattern in said magnetic recording layer or layers.

# Fig. 1

(A)

11
10
6

(B)

11
12
6

(C)

10
11
6

(D)

12
11
6

(E)

13
11
6

(F)

11'
11
6

Fig. 2

Fig. 3

## Fig. 4

## Fig. 5

0169929

## Fig. 6

0169929

Fig. 7

Fig. 8

Fig. 9

Fig.10

(a)

(b)

Fig.11

(a)

(b)

0169929

Fig. 12

Fig. 13

0169929

Fig. 14

Fig. 15

### Fig. 16

### Fig. 17

### Fig. 18

Fig. 19

0169929

Fig. 20

Fig. 21

0169929

Fig. 22

Fig. 23

(a)

(b)

(c)

(d)

Fig. 24 A

43
11
10
6

Fig. 24 B

43        43        43
11
10
6

Fig. 24 C

11a  43  11a  43  11a  43
11
10
6

Fig. 25

44
6
10
11

47
54        46
45
52   53   49
50
51

Fig. 26

(a)

(b)

(c)

(d)

## Fig. 27

(a)      (b)      (C)

## Fig. 28

## DOCUMENTS CONSIDERED TO BE RELEVANT

| Category | Citation of document with indication, where appropriate, of relevant passages | Relevant to claim | CLASSIFICATION OF THE APPLICATION (Int. Cl.4) |
|---|---|---|---|
| E | EP-A-0 122 030 (NIHON SHINKU GIJUTSU K.K.) * Claims 1,3,5,18,19,24; figures 12,14; page 1, lines 9-14 * | 1-3,7-9 | G 11 B 5/66<br>G 11 B 5/64 |
| Y | PATENTS ABSTRACTS OF JAPAN, vol. 7, no. 152 (P-208)[1297], 5th July 1983; & JP - A - 58 62824 (NIPPON DENKI K.K.) 14-04-1983 * Abstract * | 1 | |
| Y | JAPANESE JOURNAL OF APPLIED PHYSICS, vol. 23, no. 6, part 2, June 1984, pages L397-L399, Tokyo, JP; K. NAKAMURA et al.: "A new perpendicular magnetic film of Co-O by evaporation" * Figure 3 * | 1 | |
| A | PATENTS ABSTRACTS OF JAPAN, vol. 7, no. 51 (P-179)[1196], 26th February 1983; & JP - A - 57 198 535 (CANON K.K.) 06-12-1982 * Abstract * | 1 | |

**TECHNICAL FIELDS SEARCHED (Int. Cl.4)**

G 11 B

The present search report has been drawn up for all claims

| Place of search | Date of completion of the search | Examiner |
|---|---|---|
| THE HAGUE | 02-04-1985 | VITZTHUM N.A. |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO Form 1503 03.82